# EUROPEAN PATENT APPLICATION

(11) **EP 4 807 507 A1**
(43) Date of publication of application: **16.09.2026**
(21) Application number: 25736338.2
(22) Date of filing: 03.01.2025
(51) Int. Cl.: G06F 3/0481

(54) **INFORMATION TRANSMISSION METHOD AND APPARATUS**

(30) Priority: 05.01.2024 CN 202410026699
(71) Applicant: Honor Device Co., Ltd., Shenzhen, Guangdong 518040 (CN)
(72) Inventor: ZHU, Bin, Shenzhen, Guangdong 518040 (CN); GENG, Fei, Shenzhen, Guangdong 518040 (CN)
(74) Representative: Goddar, Heinz J.
(86) International application number: PCT/CN2025/070431
(87) International publication number: WO 2025/146134

(57) **Abstract**

This application provides an information transmission method and an apparatus. A user performs a first operation on a content element displayed in a first interface of a first application to display a second interface of the first application, where the second interface includes a pop-up window. After duration of the first operation reaches a first threshold, a third interface is displayed, and the interface includes content of the first interface and a target element selected and dragged by performing the first operation. In response to a subsequent operation on the target element (for example, an operation such as opening a cross-application transmission interface or selecting a target icon), content that is displayed on a screen and that is included in an interface located at a bottom layer is the same as content of the first interface. In other words, the pop-up window in the second interface is not included. This can avoid user misoperation caused by an interference factor of the pop-up window on the user, thereby improving operation efficiency of information transmission, and finally improving user experience.

## Description

This application claims priority to Chinese Patent Application No. 202410026699.2, filed with the China National Intellectual Property Administration on January 5, 2024 and entitled "INFORMATION TRANSMISSION METHOD AND APPARATUS", which is incorporated herein by reference in its entirety.

### TECHNICAL FIELD

This application relates to the field of computer technologies, and in particular, to an information transmission method and an apparatus.

### BACKGROUND

With rapid development of electronic information technologies, when using an intelligent device such as a mobile phone or a tablet, a user needs to transmit information across applications in many scenarios, that is, to transmit information in one application to another application for performing an operation such as editing, sharing, or uploading.

Many applications support the user to perform an operation (such as copying, saving, and sharing) on an element (such as a picture, a text, or a video) displayed in an interface. For example, a picture displayed in the interface can be saved by touching and holding the picture. In this scenario, when the user selects, by performing a long-press operation, an element that needs to be transmitted across applications, an operation prompt pop-up window for the selected element is triggered to be displayed in an interface of a current application, which causes interference to an operation of the user.

### SUMMARY

In view of this, this application provides an information transmission method, to resolve at least some of the foregoing problems, and discloses the following technical solutions.

According to a first aspect, this application provides an information transmission method, applied to a first electronic device, and the method includes: displaying a first interface, where the first interface includes an interface of a first application, and a content element displayed in the interface includes at least one of a picture, a text, a video, an audio, and a document; displaying a second interface in response to a first operation on the content element in the first interface, where the second interface includes a first sub-interface and a first pop-up window, and content displayed in the first sub-interface is the same as content of the first interface; displaying a third interface in response to duration of the first operation being greater than or equal to a first threshold, where the third interface includes a second sub-interface and a target element, content displayed in the second sub-interface is the same as the content of the first interface, and content of the target element is the same as content of the content element; displaying a fourth interface in response to a second operation on the target element, where the fourth interface includes a third sub-interface, the target element, and at least one application icon, and content displayed in the third sub-interface is the same as the content of the first interface; and transmitting, in response to a third operation on the target element displayed in the fourth interface, the target element to an application corresponding to a target icon, and displaying a fifth interface, where the fifth interface includes the second interface, and the target icon is any one of the at least one application icon. In this way, in a process in which the target element is dragged and transmitted to a second application, a displayed interface of the first application does not include a pop-up window that causes interference to a user, which avoids user misoperation due to interference caused by the pop-up window of the first application to a cross-application transmission operation of the user, thereby improving operation efficiency of information transmission, and finally improving user experience.

In a possible implementation of the first aspect, the displaying a third interface in response to duration of the first operation being greater than or equal to a first threshold includes: in response to the duration of the first operation being greater than or equal to the first threshold, covering an upper layer of the second interface with a screenshot of the first interface, and displaying the target element on the screenshot. It can be learned that an actually displayed interface of the first application is covered with the screenshot of the first interface, so that the displayed interface does not include the pop-up window, and content displayed in the screenshot of the first interface is content displayed by the first application before the pop-up window is displayed, which is unaware for the user. In addition, a processing process of covering the actually displayed interface of the first application with the screenshot of the first interface is simple and easy to perform.

In a possible implementation of the first aspect, the screenshot of the first interface is obtained in response to the first operation on the content element in the first interface. In this case, the screenshot of the first interface is taken after the first operation performed by the user on the first interface is detected, to ensure that an interface of the screenshot does not include the pop-up window.

In a possible implementation of the first aspect, after the screenshot of the first interface is obtained, the method further includes: storing the screenshot of the first interface. Therefore, the screenshot can be read at any time in subsequent use.

In a possible implementation of the first aspect, the storing the screenshot of the first interface includes: storing the screenshot of the first interface in memory space. In this way, storing the screenshot in a memory can reduce time of reading the screenshot, shorten duration from displaying the second interface that includes the pop-up window to displaying the screenshot of the first interface, thereby further improving user experience.

In a possible implementation of the first aspect, the method further includes: deleting the screenshot of the first interface in response to the third operation on the target element. In this way, storage space occupied by the screenshot of the first interface can be recovered in a timely manner, and utilization of the storage space can be improved.

In a possible implementation of the first aspect, the first pop-up window includes at least one control; and after the displaying a second interface in response to a first operation on the content element in the first interface, the method further includes: performing corresponding processing on the content element in response to a tap operation on the control in the first pop-up window; or after the displaying a fifth interface, the method further includes: performing corresponding processing on the content element in response to a tap operation on the control in the first pop-up window displayed in the fifth interface. It can be learned therefrom that when displaying the interface that includes a pop-up window, an electronic device may perform corresponding processing on a target element selected by the user in response to an operation performed by the user on a control displayed in the pop-up window. In this way, this solution does not affect an original function of the first application, thereby improving information transmission convergence.

In a possible implementation of the first aspect, the fifth interface further includes a transmission result of the first electronic device for the target element.

In a possible implementation of the first aspect, the fifth interface includes a transmission feedback bar, and the transmission feedback bar is used to prompt the transmission result.

In a possible implementation of the first aspect, the transmitting, in response to a third operation on the target element, the target element to an application corresponding to a target icon, and displaying a fifth interface includes: in response to the third operation on the target element, transmitting the target element to the application corresponding to the target icon, and displaying a sixth interface, where the sixth interface includes the first interface and a floating window, the floating window displays an interface of the application corresponding to the target icon, and the floating window includes a close button and a minimize button; and displaying the fifth interface in response to an operation on the close button or the minimize button, where content displayed in the fifth interface is the same as content of the second interface.

In a possible implementation of the first aspect, the third operation is an operation of moving the target element to the target icon.

In a possible implementation of the first aspect, the target icon is an icon of an application installed in the first electronic device; or the target icon is an icon of an application installed in a second electronic device, and the second electronic device is communicatively connected to the first electronic device.

According to a second aspect, this application further provides an electronic device. The electronic device includes one or more processors, a storage, and a touchscreen, where the storage is configured to store program code; and the processor is configured to run the program code, to enable the electronic device to implement the information transmission method according to any one of the implementations of the first aspect.

According to a third aspect, this application further provides a chip system, including at least one processor and an interface, where the interface is configured to receive code instructions and transmit the code instructions to the at least one processor, and the at least one processor runs the code instructions to implement the information transmission method according to any one of the implementations of the first aspect.

According to a fourth aspect, this application further provides a computer-readable storage medium, storing instructions thereon, where when the instructions are run on an electronic device, the electronic device is enabled to perform the information transmission method according to any one of the implementations of the first aspect.

According to a fifth aspect, this application further provides a computer program product, storing instructions thereon, where when the computer program product is run on an electronic device, the electronic device is enabled to perform the information transmission method according to any one of the implementations of the first aspect.

### BRIEF DESCRIPTION OF DRAWINGS

FIG. 1A, FIG. 1B, FIG. 1C, FIG. 1D, and FIG. 1E are schematic diagrams of an interface change process of an electronic device when an image is transmitted across applications;
FIG. 2A, FIG. 2B, FIG. 2C, FIG. 2D, FIG. 2E, and FIG. 2F are schematic diagrams of an interface change process in an information transmission process according to an embodiment of this application;
FIG. 3A, FIG. 3B, FIG. 3C, FIG. 3D, FIG. 3E, and FIG. 3F are schematic diagrams of an interface change process in another information transmission process according to an embodiment of this application;
FIG. 4 is a flowchart of an information transmission method according to an embodiment of this application;
FIG. 5 is a schematic diagram of a structure of an electronic device according to an embodiment of this application; and
FIG. 6 is a schematic diagram of a software architecture of an electronic device according to an embodiment of this application.

### DESCRIPTION OF EMBODIMENTS

The terms "first", "second", "third", and the like in the specification, claims, and accompanying drawings of this application are used to distinguish between different objects, but are not used to limit a specific sequence.

In embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

To facilitate understanding of the technical solutions provided in this application, related terms used in this application are first described.

Cross-application transmission means information transmission between two applications in a same device or information transmission between two applications in different devices. To be specific, target information is obtained by using one application, and the target information is shared, collected, or edited by using another application. For example, a text or an image on a web page in a browser is forwarded to a WeChat friend, or a picture sent by the WeChat friend is sent to a QQ friend, or a text in WeChat in an electronic device A is sent to a notepad application of an electronic device B for editing.

Cross-application transmission interface: In this application, the cross-application transmission interface is a human-computer interaction interface provided by an electronic device based on a requirement of a user for information transmission across applications. In some embodiments of this application, this function may alternatively be referred to as "smart transfer". As the name of the cross-application transmission interface implies, in any interface displayed by the electronic device, when the user needs to transmit information in an interface across applications, the user may touch and hold an element in the interface and drag the element to an edge of a screen, and the electronic device performs three-dimensional transformation on an interface originally displayed on the screen to create, on the screen, a visual effect of pushing the original interface inward, and displays, on a side edge of the screen, an icon recommended by the electronic device for the element (for details, reference may be made to a related description in a subsequent embodiment, and details are not described herein). The recommended icon may be an icon of an application, a service icon of the application, or the like. Then, the user places the dragged element onto the icon and releases the finger, so that the element can be transmitted to an application corresponding to the icon, and a corresponding application function is enabled. Specifically, in this application, a specific application APP installed in the electronic device may have a plurality of application services. In the cross-application transmission interface provided in this application, a service icon of an application displayed in the cross-application transmission interface may include some or all of application service icons provided by a same application APP. This is not limited in this application.

A floating window is a system tool of an intelligent device, and can suspend an operation window of an application over an interface or on a home screen, so that a user easily switches a recently used application. As a shrunk application interface, the floating window may be displayed on top of another application interface (for example, an application interface displayed in full screen), and the floating window may still display an interface style and a function list that are inherent to an application corresponding to the floating window. The user may directly operate a control in the floating window interface to implement a corresponding function without closing or exiting another application. For example, a message such as a WeChat message or a QQ message is suddenly received when a game is being played or a video is being watched in full screen, a chat interface corresponding to the message may be directly displayed over a game interface in a form of a floating window. The user may view and reply to the message in the chat interface displayed in the floating window, without a need to switch or exit a game application.

A capsule is a representation form of a minimized floating window, and is so named after its shape like a capsule. The capsule differs from the floating window in that, the capsule generally cannot display an interface style and a function list that are inherent to an application corresponding to the capsule, and is displayed on a side edge of a screen of an electronic device only in a form of a small icon. A user may tap the capsule to expand the capsule, and an expanded capsule is displayed on top of the screen in a form of an application interface (for example, a floating window).

A side application bar is a shortcut function region that is displayed on a side edge of a screen of an electronic device and that may accommodate a plurality of application icons. A user may customize a type of an application and a sequence of application icons in the side application bar. In any interface, the user may slide inward from an edge of the screen and pause to invoke the side application bar. The user may tap an application icon to open a corresponding application. The opened application is usually displayed on top of the interface in a form of a floating window.

Global Favorites is an application service provided in the embodiments of this application, and may be used to collect elements such as a picture, a text, a voice, and a web page that are browsed by a user based on an electronic device. After an element is collected into a Global Favorites service, the user may further edit the collected element, for example, add a label to a collected video to mark an emphasis and the like, so that the user can efficiently review key information carried in the element when reviewing the element.

For example, the user may collect the element into the Global Favorites service through the cross-application transmission interface provided in this application, or may collect the element into the Global Favorites service by performing a three-finger downward sliding operation on the element. After the element is successfully collected into the Global Favorites service, the electronic device may display a capsule corresponding to the Global Favorites service in the interface, so that the user collects another element in the interface into the Global Favorites service. The user may further share/transmit content in Global Favorites to another application or another electronic device.

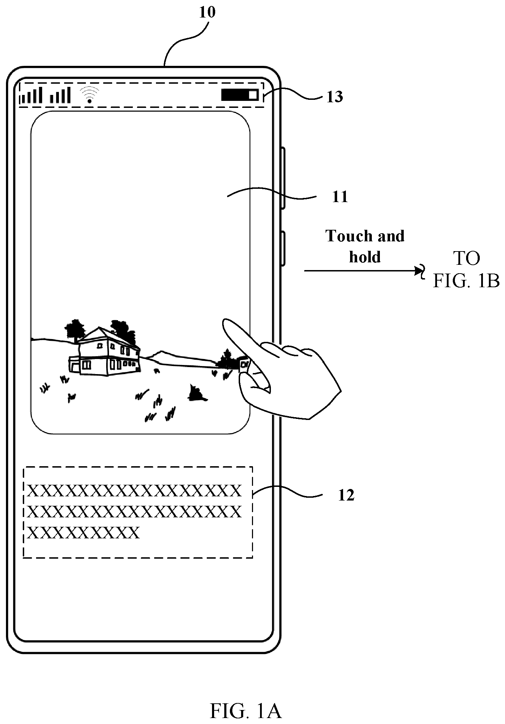

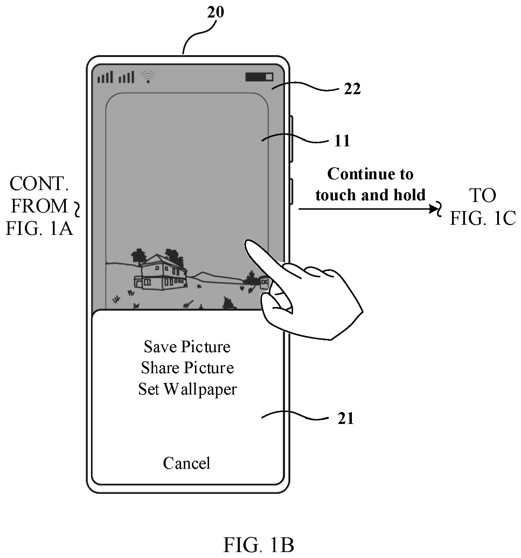

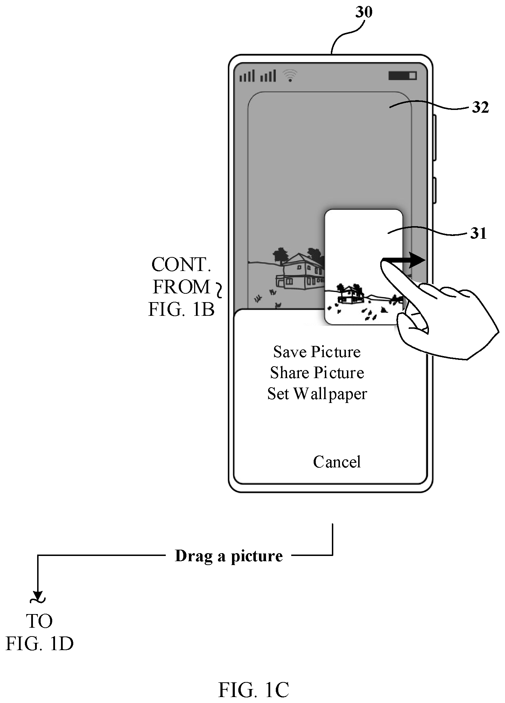

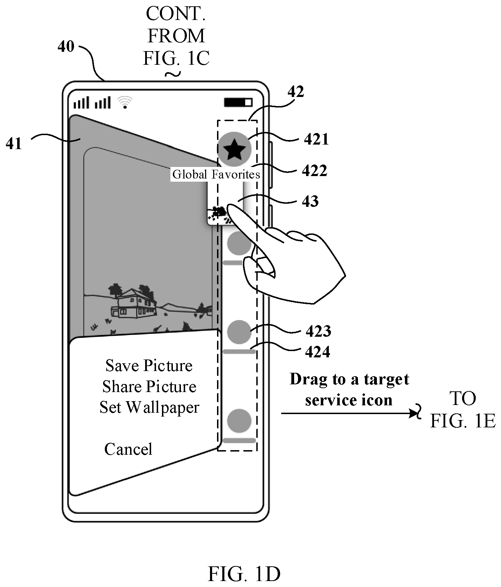

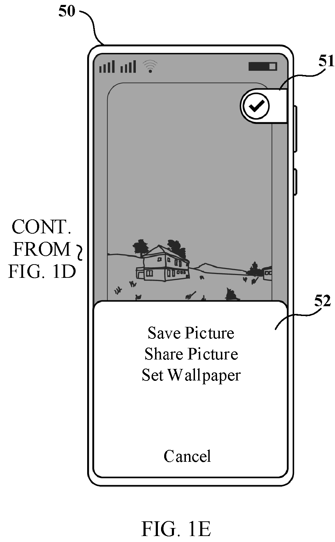

FIG. 1A, FIG. 1B, FIG. 1C, FIG. 1D, and FIG. 1E are schematic diagrams of an interface change process of an electronic device when an image is transmitted across applications.

In this embodiment, an example in which an image in a browser is transmitted to a Global Favorites service is used for description. Certainly, a to-be-transmitted image may alternatively be from another application, for example, Weibo ^{®} or WeChat ^{®}. A source of the to-be-transmitted image is not limited in this application.

As shown in FIG. 1A, an interface 10 is an interface of a browser application, and the interface may include an image 11 and a text 12.

In addition, as shown in FIG. 1A, content displayed on a screen of the electronic device further includes a status bar 13 on top. In this embodiment of this application, the interface 10 does not include content displayed in the status bar 13, and the status bar 13 is system display content of the electronic device. For example, the status bar 13 may include information such as cellular network signal strength, a Wi-Fi icon, and a current remaining battery level, and may further include time, operator information, and the like. Details are not described herein.

The browser application supports a user to perform a corresponding operation on an element (such as a text or an image) in the interface 10. For example, the user touches and holds the element to select the element, for example, touches and holds a picture to select the picture, and touches and holds a text in the interface to select the text. For example, the electronic device selects the image in response to an operation (for example, a long-press operation) performed by the user on the image 11, and displays an interface 20 shown in FIG. 1B.

As shown in FIG. 1B, the interface 20 includes an interface 22 located at a bottom layer and a pop-up window 21 located at an upper layer of the interface 22. The pop-up window 21 may include operable options provided by the browser application for the image 11 selected by the user, such as "Save Picture", "Share Picture", and "Set Wallpaper", and further includes a "Cancel" button. In a scenario in which the user transmits the image 11 to another application or service by using a cross-application transmission function of the electronic device, the user continues to touch and hold the image 11 and drag the image 11 to an edge of the screen to display an interface 30 shown in FIG. 1C.

For example, the interface 22 covers an upper layer of the interface 10 shown in FIG. 1A with a grayscale layer, to highlight content displayed in the pop-up window 21. The grayscale layer in the interface 22 is only an example, and another application may not include the grayscale layer, which is not limited in this application.

As shown in FIG. 1C, a difference between the interface 30 and the interface 20 lies in that an image 31 located at a top layer is further included. The image 31 is an image obtained through a continuous long-press operation by the user on the image 11, and content included in the image 31 is the same as content included in the image 11. When the user does not release the finger, the image 31 may move with the fingertip in the interface 30.

The image 31 may be a thumbnail of the image 11. In other words, there is no difference between the image 31 and the image 11 except an image size.

In response to a second operation performed by the user on an image 32, such as a drag operation, the electronic device displays an interface 40 shown in FIG. 1D

In an example embodiment, when the image 32 is dragged to a position that has a distance from a right side edge or a left side edge of the screen being less than a specific threshold, the interface 40 is displayed, and the interface 40 may include a sub-interface 41, an icon region 42, and an image 43.

In an example embodiment, content displayed in the sub-interface 41 is the same as content displayed in the interface 20 (except the status bar).

The icon region 42 may display one or more application icons. For example, a corresponding text description may be displayed below each icon in the icon region 42. For example, an icon 421 is an icon of service "Global Favorites", and a text 422 may be "Global Favorites". A text below an application icon is merely used to facilitate the user to understand a specific application or function that corresponds to the icon. A specific icon style and specific text content are not limited in this application.

Content included in the image 43 is the same as content of the image 31 and the image 11. The image 43 may be a thumbnail of the image 31. In other words, the image 43 may be considered as an image obtained by directly scaling down the image 31.

In response to that the user moves a dragged element (that is, the image 43) to a target icon in the interface 40 and releases the finger, for example, the target icon is an icon of Global Favorites, in response to that the user moves the image 43 to the icon of Global Favorites and releases the finger, the electronic device displays an interface 50 shown in FIG. 1E.

As shown in FIG. 1E, a difference between the interface 50 and the interface 20 shown in FIG. 1B lies in that the interface 50 further includes a capsule 51. The capsule 51 is configured to display that the image 43 has been transmitted to the application service "Global Favorites", in other words, the image 43 has been stored in a Global Favorites service.

For example, the capsule 51 and the pop-up window 52 may be located at a same layer, which may be a top layer of the interface.

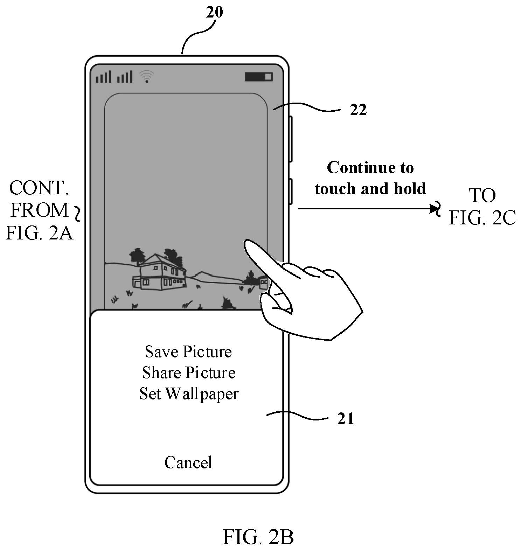

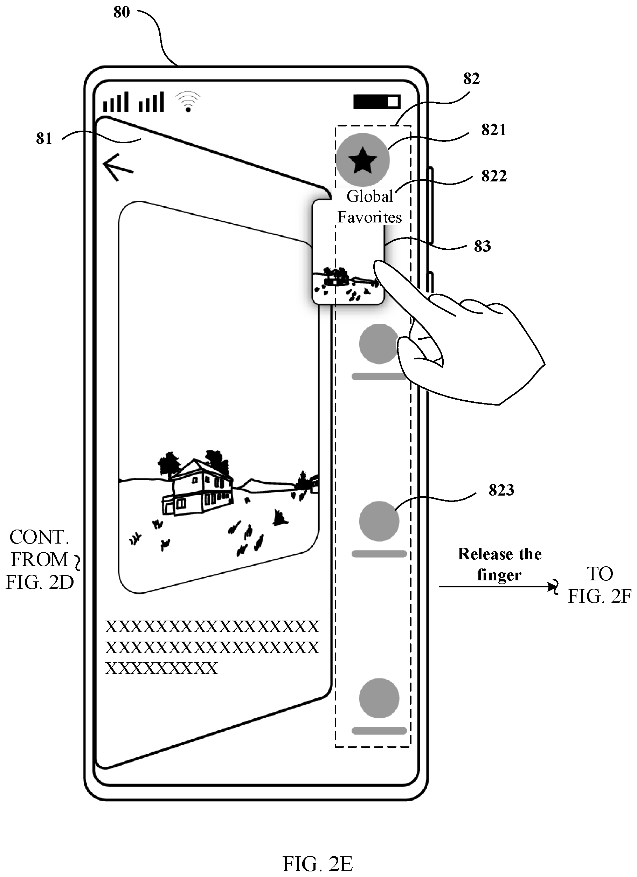

In addition, when the interface shown in FIG. 2B or FIG. 2E is displayed, if the electronic device detects an operation (for example, a tap operation) performed by the user on any control (that is, Save Picture, Share Picture, Set Wallpaper, or Cancel) in the pop-up window, corresponding processing is performed on a selected content element. For example, if the user taps "Save Picture " in the pop-up window, the electronic device responds to the operation to save the picture 11 in storage space of the electronic device.

It can be learned from the interface change process in FIG. 1A to FIG. 1E that, in a whole process in which the user drags an element (that is, the image 31) in a browser application interface and transmits the element to a target service application, the pop-up window 21 is always displayed in the browser application interface. However, the pop-up window 21 is prone to cause interference to a drag operation of the user, which causes low interaction efficiency between the user and the electronic device, and poor user experience.

For the foregoing problem, this application provides an information transmission method. In this method, after a first operation performed by a user on a target element in a first interface of a first application is received, a screenshot of the first interface may be obtained and stored. Storage herein may mean storage into a cache or a memory. In response to holding duration of the first operation reaching a specific threshold, the screenshot of the first interface and a target element located at an upper layer of the screenshot are displayed. Then, a cross-application transmission operation is performed on a dragged target element to transmit the target element from the first application to a second application. In a process in which the target element is dragged and transmitted to the second application, the screenshot of the first interface is always covered in a window of the first application. In this way, after it is determined that an intention of the user is to transmit the target element across applications, a displayed interface of the first application does not include a pop-up window that causes interference to the user, which avoids user misoperation due to interference caused by the pop-up window of the first application to the cross-application transmission operation of the user, thereby improving operation efficiency of information transmission, and finally improving user experience.

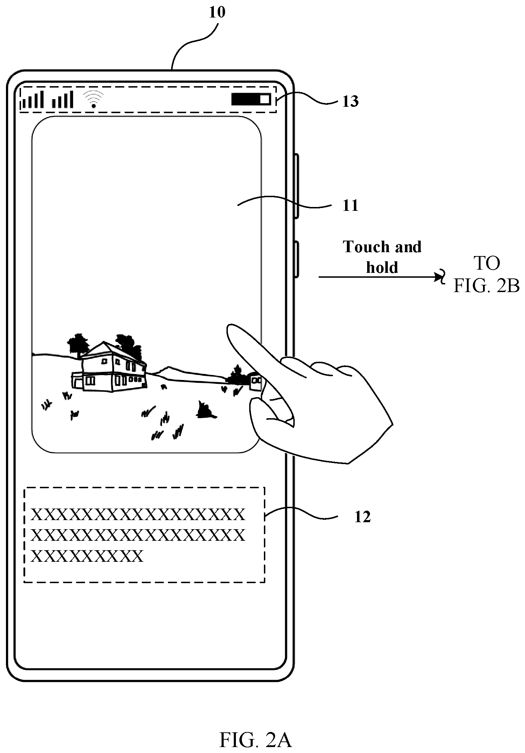

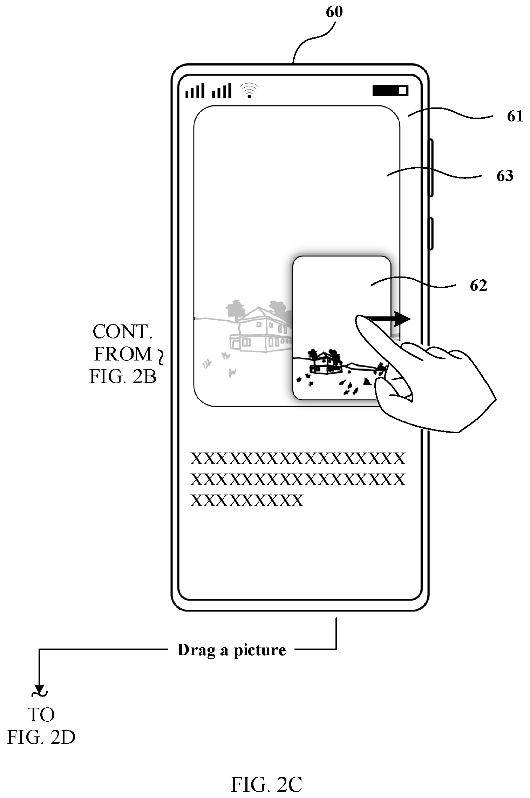

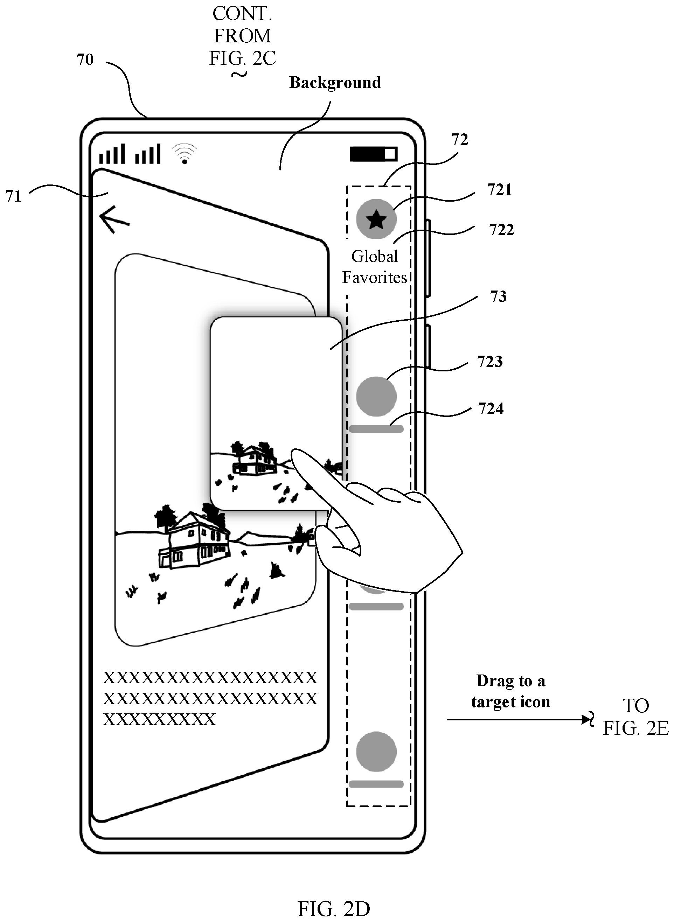

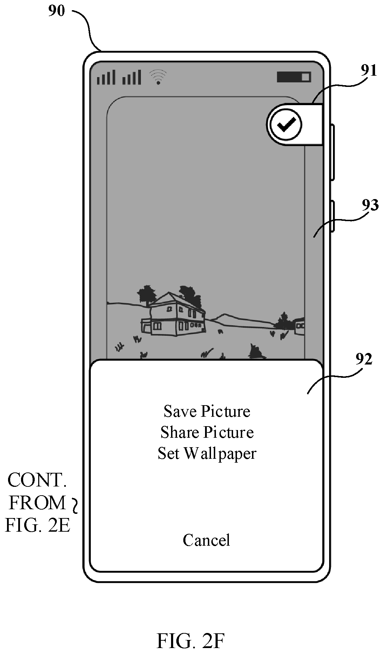

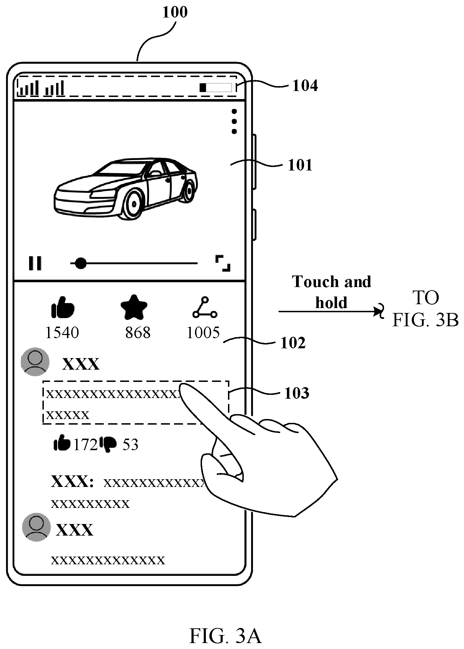

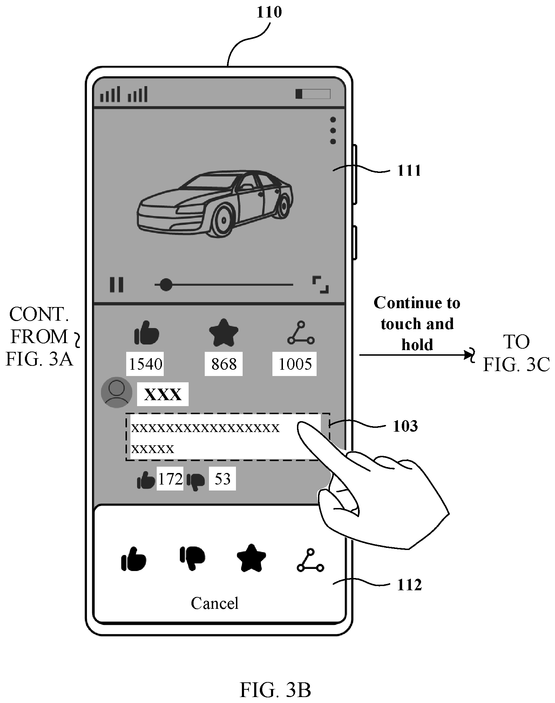

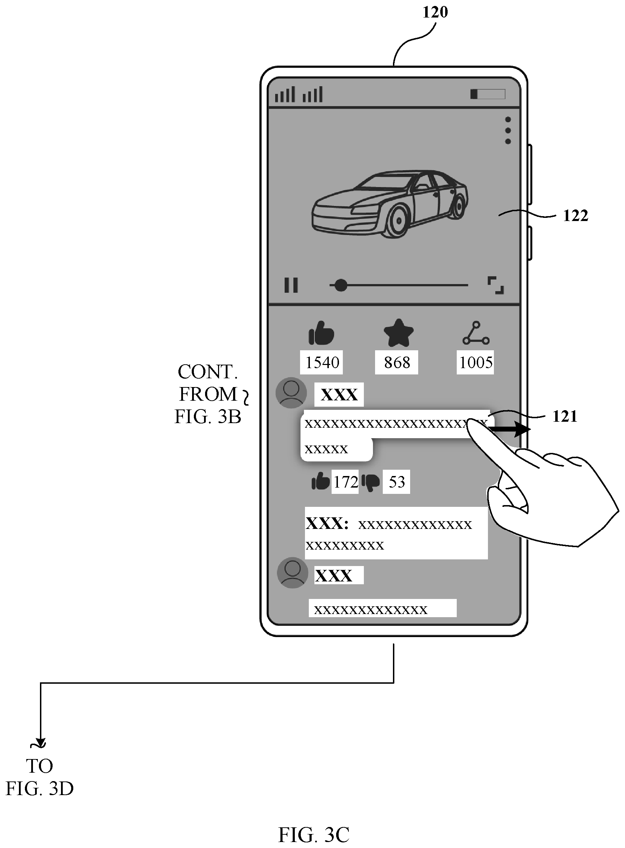

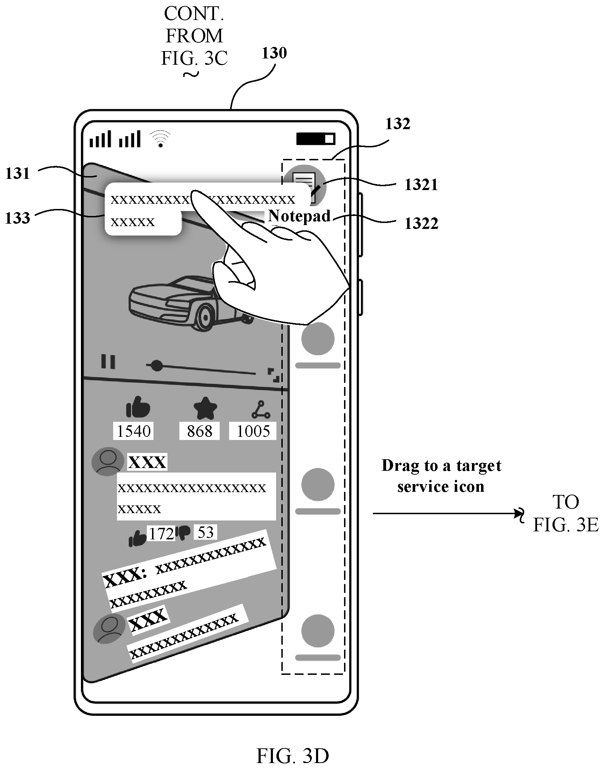

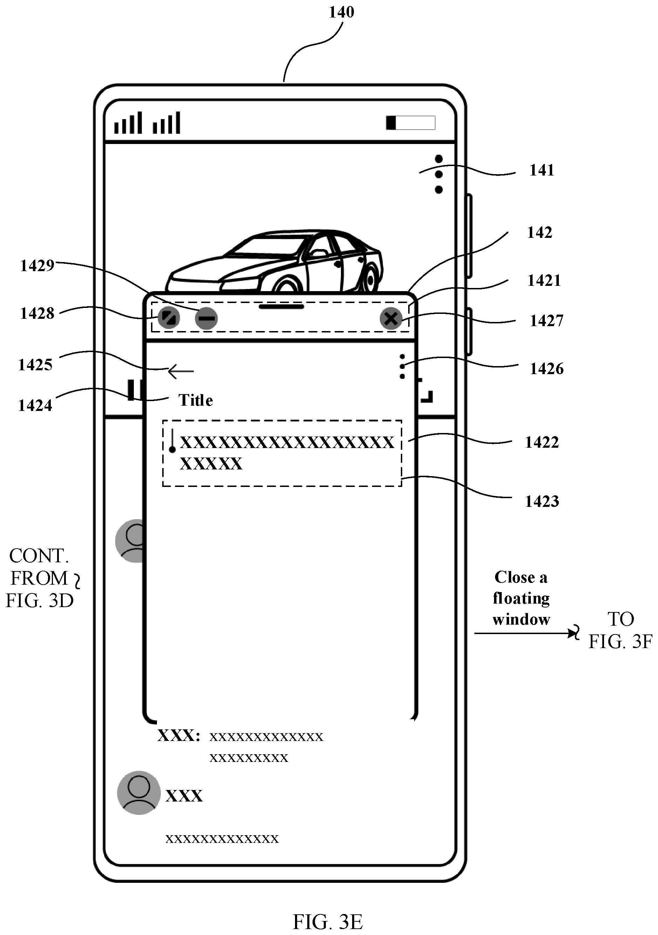

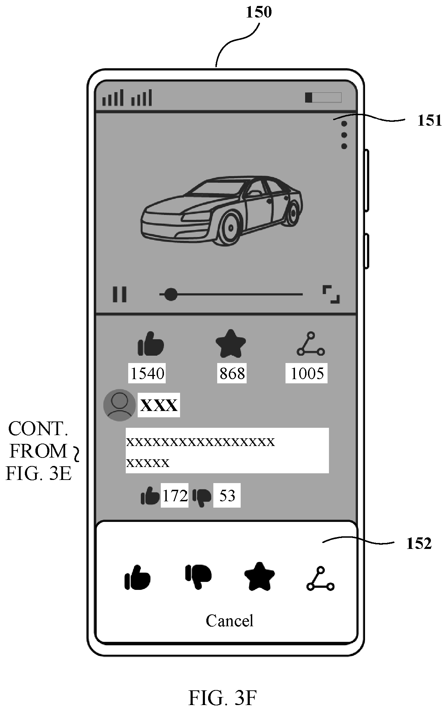

The following describes an interface change of the electronic device in an information transmission process according to this application with reference to FIG. 2A, FIG. 2B, FIG. 2C, FIG. 2D, FIG. 2E, and FIG. 2F and FIG. 3A, FIG. 3B, FIG. 3C, FIG. 3D, FIG. 3E, and FIG. 3F.

FIG. 2A, FIG. 2B, FIG. 2C, FIG. 2D, FIG. 2E, and FIG. 2F show schematic diagrams of an interface in an information transmission process according to an embodiment of this application. In this embodiment, a scenario in which an image is transmitted across applications is used as an example for description.

An interface 10 shown in FIG. 2A is an interface of a first application, and a content element displayed in the interface 10 may include an image 11, a text 12, a video, an audio, a document, and the like. The first application may be an application such as a browser, Weibo, WeChat, and Headline that support display of the foregoing content. A specific name and a type of the first application are not limited in this application. In this embodiment of this application, the interface 10 does not include content displayed in a status bar 13, and the status bar 13 is system display content of the electronic device.

The first application in this embodiment supports the user in performing a corresponding operation on content displayed in the interface 10, such as Save Picture, Share Picture, and copying a text. The electronic device receives a first operation (for example, a long press with duration greater than or equal to 200 ms) performed by the user on the content element displayed in the interface 10. In response to the first operation, the electronic device takes a screenshot of the interface 10 (that is, obtains the screenshot of the first interface), and displays an interface 20 shown in FIG. 2B.

As shown in FIG. 2B, the interface 20 includes a pop-up window 21 located at a top layer and a sub-interface 22 located at a lower layer of the pop-up window. The pop-up window 21 is configured to display operable options for the image 11 touched and pressed by the user, such as Save Picture, Share Picture, and Set Wallpaper. It can be learned that the first operation performed on an element in the interface 10 triggers a built-in element operation function of the first application.

Content of interfaces shown in FIG. 2A and FIG. 2B is the same as content of interfaces shown in FIG. 1A and FIG. 1B. For related content, refer to descriptions of FIG. 1A and FIG. 1B. Details are not described herein again.

In addition, the electronic device supports a system-level element drag operation. For example, an element selected by the user may be dragged. The user may perform another operation on a dragged element, for example, perform cross-application transmission to transmit the dragged element from the first application to another application or service.

In this example, an example in which the image 11 is transmitted across applications is used for description. The user continues to touch and hold the image 11 in the interface 10 to trigger the system-level element drag operation. To be specific, in response to holding duration of the first operation exceeding a specific threshold (for example, 1s), the electronic device displays an interface 60 shown in FIG. 2C. In addition, if the finger is released when the holding duration of the first operation does not reach a specific threshold, for example, when long-press duration reaches 500 ms, the interface shown in FIG. 2B is still displayed, and the screenshot of the interface 10 is deleted.

As shown in FIG. 2C, the interface 60 includes a sub-interface 61 located at a bottom layer and an image 62 located at the top layer. The sub-interface 61 is the screenshot of the interface 10.

A difference between the interface 60 and the interface 10 shown in FIG. 2A lies in that the interface 60 further includes, based on the interface 10, a dragged element, that is, the image 62.

In an example embodiment, the image 62 may be a thumbnail of the image 11. In other words, content displayed in the image 62 is the same as the image 11, but an image size is different. When the user does not release the finger, the image 62 may move with the finger in the interface 60.

For example, the screenshot of the interface 10 may be covered on an upper layer of an interface displayed by the first application, and the image 11 obtained from the interface 10 is further scaled down or downsampled to obtain the image 62, and the image 62 is displayed on top, so that a display effect shown in the interface 60 is finally presented.

Optionally, to prompt the user that the image 62 is in a selected and dragged state, bokeh or blurring processing may be performed on an original image displayed in the sub-interface 61, that is, the image 63. For example, the image 11 may be obtained from the interface 10, and bokeh or blurring processing may be performed on the image 11 to reduce definition of the image, and then the image obtained through bokeh or blurring processing is covered on the image 11 in the sub-interface 61. In this way, a display effect shown in FIG. 2C is finally presented, that is, only definition of the image 63 is low in the sub-interface 61, so that a focus of the user naturally converges on the dragged image 62.

In another embodiment of this application, the sub-interface 61 displays an image, that is, the screenshot of the interface 10. For ease of operation, bokeh or blurring processing may be directly performed on the entire screenshot.

In an example embodiment, the electronic device displays a cross-application transmission interface in response to an operation performed by the user on the image 62, for example, a drag operation in which the image 62 is dragged to a position that has a distance from a right side edge or a left side edge of the screen being less than a specific threshold. An example in which the image 62 is dragged to the right side edge is used for description. The cross-application transmission interface is an interface 70 shown in FIG. 2D. In addition, if the electronic device detects that when the finger is released, the image 62 is at a position that has a distance from the left side edge or the right side edge of the screen being greater than a specific threshold, the interface 20 shown in FIG. 2B is displayed, and the screenshot of the interface 10 is deleted.

As shown in FIG. 2D, the interface 70 may include a sub-interface 71, an icon region 72, and an image 73.

In an example embodiment, the sub-interface 71 and the icon region 72 are located at a same layer (which may be referred to as a first layer), and the image 73 is located at an upper layer of the first layer.

Content displayed in the sub-interface 71 is basically the same as content displayed in the interface 10. In this embodiment of this application, content displayed in the sub-interface 71 is the screenshot of the interface 10. The sub-interface 71 may be considered as an interface obtained after three-dimensional transformation is performed on the screenshot of the interface 10. In the interface 70, the sub-interface 71 may present, on the screen, a visual effect of pushing inward the interface 10, that is, a visual effect of "door opening". It may be understood that this "door opening" visual effect may more intuitively metaphorize an action of transmitting an element. Optionally, in the user interface 70, a background behind the sub-interface 71 may be a picture obtained after a blur effect is superimposed on a home screen wallpaper of the electronic device.

The icon region 72 is the foregoing side application bar and may display one or more application icons. In an example embodiment, the application icon displayed in the icon region 72 may be a related application icon recommended by the electronic device based on an element selected by the user or may be a service icon of an application.

For example, a corresponding text description may be displayed below each icon in the icon region 72, for example, a text 722 is displayed below an icon 721, and a text 724 is displayed below an icon 723. These text descriptions may indicate an application name corresponding to an icon or a service name of the application. For example, the icon 721 is an icon of service "Global Favorites", and the text 722 may be "Global Favorites". Global Favorites herein is the foregoing Global Favorites service, and details are not described herein again.

A text below an icon is merely used to facilitate the user to understand a specific application or function that corresponds to the icon. A specific icon style and specific text content are not limited in this application.

Content included in the image 73 is the same as the content of the image 62 and the image 11. For example, the image 73 may be a thumbnail of the image 62. In other words, the image 73 may be considered as an image obtained by directly scaling down the image 62. In this case, when the user selects, in the icon region 72, an application icon (that is, a target icon) that is intended to receive the image, the image 73 does not cause a large area of blocking of an icon and a text in the icon region 72, thereby facilitating the user to select a desired icon.

In response to an operation performed by the user to move the image 73 to within a preset distance range from the target icon, the electronic device displays an application interface or feedback information that corresponds to the target icon. For example, in this example, the target icon is an icon of the Global Favorites service, and an interface 80 shown in FIG. 2E is displayed. In addition, if the electronic device detects that when the finger is released, the image 73 is at a position that has a distance from any icon in the icon region 72 being greater than the preset distance, the interface 20 shown in FIG. 2B is displayed, and the screenshot of the interface 10 is deleted.

Optionally, to guide the user to accurately place a dragged element into a required application, when a distance between an image 83 and a specific icon in an icon region 82 is less than a specific threshold, the icon may display a specific visual special effect. For example, the icon and a corresponding text may be absorbed by and approach the image 83, and the icon and the text corresponding to the icon may be enlarged. For example, in the interface shown in FIG. 2E, when the image 83 moves to a position having a distance of a preset threshold from a Global Favorites icon 821, the Global Favorites icon 821 is closer to the image 83 than another icon and text, and the icon 821 is enlarged. In this case, the user is prompted that if the finger is released at a position of the icon, the image 83 (or the image 11) is transmitted to an application corresponding to the icon 821, thereby improving human-computer interaction efficiency.

In another embodiment of this application, the sub-interface 61 shown in FIG. 2C, the sub-interface 71 shown in FIG. 2D, and a sub-interface 81 shown in FIG. 2E may further include a grayscale layer located at the top layer, which is the same as the grayscale layer of the sub-interface 22 shown in FIG. 2B. In this case, a currently operated object may be highlighted, and a focus of the user may converge on the operated object.

In response to moving the image 73 onto the target icon and releasing the finger, the electronic device deletes the screenshot of the interface 10 and displays an interface 90 shown in in FIG. 2F.

As shown in FIG. 2F, the interface 90 includes a capsule 91, a pop-up window 92, and a sub-interface 93. Content displayed in the pop-up window 92 and the sub-interface 93 is the same as the content displayed in the interface 20, and the interface 90 further includes the capsule 91 located on the interface 20.

The capsule 91 is configured to display that the image 83 is successfully transmitted to an application corresponding to the target icon. In this example, the target icon is the Global Favorites service.

In addition, as described above, after the electronic device receives a tap operation on the capsule 91, the capsule expands to display an interface of the application. For example, the interface of the application is displayed on top of the screen in a form of a floating window.

The pop-up window 92 is a pop-up prompt window of an application corresponding to the interface 90, and the pop-up window 92 is the pop-up window 21 shown in FIG. 2B. Both the pop-up window 92 and the capsule 91 may be suspended over an upper layer of the sub-interface 93. The pop-up window 92 may be a sliding panel that moves upward from the bottom of the screen to present a sliding visual effect.

The content displayed in the sub-interface 93 is the same as the interface 10 shown in FIG. 2A. A difference lies in that the sub-interface 93 includes a grayscale layer located at the top layer, so that the pop-up window 92 can be highlighted. In this case, a focus of the user converges on the pop-up window 92.

It can be learned from the interface change process shown in FIG. 2A to FIG. 2F that, after the information transmission method provided in this embodiment of this application is used, when the user touches and holds a specific element on the first interface (that is, an interface of the first application), a screenshot of the first interface is taken, and a second interface shown in FIG. 2B is displayed, that is, an interface including the pop-up window 21. Thereafter, the user continues to touch and hold the element, the element is dragged to form a target element that is independent of the interface of the first application, and the dragged target element is displayed on top of the screen. An interface (that is, the sub-interface 61) that is displayed on the screen and that is located at a lower layer of the dragged target element is the screenshot of the first interface, that is, an interface not including the pop-up window 21. In addition, it can be learned from FIG. 2D and FIG. 2E that, in a process in which the target element is dragged and transmitted to another application, the screenshot of the first interface is always displayed in the interface of the first application until an action of transmitting the target element cross applications is completed and the second interface, that is, an interface including the pop-up window of the first application, is displayed, as shown in FIG. 2F. In other words, in a process in which the target element selected by the user is dragged until the target element is successfully transmitted to another application in the electronic device or an application of another electronic device, the screenshot of the first interface not including the pop-up window 21 is displayed. This can avoid user misoperation caused by an interference factor of the pop-up window on the user, thereby improving operation efficiency of information transmission, and finally improving user experience.

In another scenario, after the user moves the dragged target element onto the target icon and releases the finger, an application corresponding to the target icon may be started, for example, an interface of the application corresponding to the target icon is displayed in the floating window.

FIG. 3A, FIG. 3B, FIG. 3C, FIG. 3D, FIG. 3E, and FIG. 3F show schematic diagrams of an interface change in another information transmission process according to an embodiment of this application. In this embodiment, an example in which a content element of a text type in a first application is transmitted across applications to a second application is used for description

An interface 100 shown in FIG. 3A is an interface of the first application. In this embodiment, the first application may be an application such as videos, novel, or news. In this embodiment, a video playback application is used as an example for description. The interface 100 may include a video playback region 101 and a comment region 102.

The video playback region 101 is configured to play video content. The comment region 102 is configured to display posted comment content, such as a text 103, and comment content may be specifically a text, a picture, or the like. The comment region 102 may be further configured to post new comment content.

In addition, as shown in FIG. 3A, content displayed on a screen of an electronic device further includes a status bar 104 on top. In this embodiment of this application, the interface 10 does not include content displayed in the status bar 13, and the status bar 13 is system display content of the electronic device.

The first application supports the user in performing an operation, such as like, copy, favorite, or share, on the posted comment content. In response to a first operation (for example, a long-press operation) performed by the user on the posted comment content, the electronic device displays a prompt pop-up window for the operation content that can be performed on the comment. For example, in this example, in response to a long-press operation on a posted text 103, the electronic device takes a screenshot (that is, obtains a screenshot of the first interface) of the interface 100, and displays an interface 110 shown in FIG. 3B.

As shown in FIG. 3B, the interface 110 may include a sub-interface 111 at a bottom layer and a pop-up window 112 at a top layer.

Content included in the sub-interface 111 is the same as content of the interface 100. Optionally, the sub-interface 100 may further include a grayscale layer, to highlight the pop-up window 112, so that a focus of the user converges on the pop-up window 112.

The pop-up window 112 may include an operation supported by the first application to be performed by the user on selected comment content. For example, an operation such as "Like", "Dislike", "Favorite", or "Share" may be performed.

The user continues to touch and hold the text 103, and the selected comment content is dragged to form a text block independent of the interface of the first application. In an example embodiment, in response to holding duration of the first operation on a target element (that is, the text 103) being greater than or equal to a first threshold (that is, 1s), the electronic device displays an interface 120 shown in FIG. 3C. In addition, if the finger is released when the holding duration of the first operation does not reach a specific threshold, for example, when long-press duration reaches 500 ms, the interface shown in FIG. 3B is still displayed, and the screenshot of the interface 100 is deleted.

As shown in FIG. 3C, the interface 120 includes a text 121 and a sub-interface 122. The sub-interface 122 is the screenshot of the interface 100. The text 121 is suspended over the sub-interface 122. In addition, when the user does not release the finger, the text 121 may move with the finger in the interface 120.

Content included in the text 121 is the same as the text 103 in the interface 100, and the text 121 may be obtained by copying the text 103.

As with a drag operation on a picture, the electronic device may also drag all content included in the text 103 as a whole to form the text 121 in response to that the holding duration of the long-press operation performed by the user on the text 103 reaches a first threshold (for example, 1s).

Optionally, the text 121 may be a text obtained after a size of a font of the text 103 is reduced. After the text 103 is dragged to form the text 121, the sub-interface 122 may still display an original text 103.

Further, a grayscale layer may be covered on an upper layer of the entire sub-interface 122. In this way, the user may be prompted that the text 121 is in a selected and dragged state, so that a focus of the user naturally converges on the dragged text 121. In addition, bokeh processing or blurring processing may be performed on the text 103 to prompt the user that the text 121 is in the selected and dragged state.

The electronic device displays an interface 130 shown in FIG. 3D in response to a second operation (for example, a drag operation) performed by the user on the text 121.

In an example embodiment, the electronic device displays a cross-application transmission interface in response to an operation that the text 121 is dragged to a position that has a distance from a right side edge or a left side edge of the screen being less than a specific threshold. An example in which the text 121 is dragged to the right side edge is used for description, and the cross-application transmission interface is the interface 130 shown in FIG. 3D. In addition, if the electronic device detects that when the finger is released, the text 121 is at a position that has a distance from the left side edge or the right side edge of the screen being greater than a specific threshold, the interface shown in FIG. 3B is displayed, and the screenshot of the interface 100 is deleted.

As shown in FIG. 3D, the interface 130 may include a sub-interface 131, an icon region 132, and a text 133. Content displayed in the sub-interface 131 is the same as that in the interface 100. In some embodiments of this application, the content displayed in the sub-interface 131 is the screenshot of the interface 100. The sub-interface 131 may be considered as an interface obtained after three-dimensional transformation is performed on the screenshot of the interface 100. Similar to FIG. 2D, in the interface 130, the sub-interface 131 may present, on the screen, a visual effect of pushing inward the interface 100, that is, a visual effect of "door opening".

Optionally, the sub-interface 131 may further include a grayscale layer located at the top layer. In this way, a currently operated object and the icon region 132 on the right side edge may be highlighted, so that a focus of the user converges on the operated object and the icon region.

The icon region 132 is a side application bar, and may display one or more application icons. In an example embodiment, the application icon displayed in the icon region 132 may be an icon of a related application recommended by the electronic device based on an element selected by the user or may be a service icon of an application. For example, when the element selected by the user is a text, the icon region 132 may include an icon of an application, for example, "Notepad", "Notes", "WeChat", or "Weibo", that may be used by the user to receive the text content. In this example, the element selected by the user is a text, and the icon region 132 may include an icon of an application such as "Notepad".

Similar to the embodiment shown in FIG. 2A, FIG. 2B, FIG. 2C, FIG. 2D, FIG. 2E, and FIG. 2F, a corresponding text description may be displayed below each icon in the icon region 132, and details are not described herein again.

In an example embodiment, content included in the text 133 is the same as content of the text 103. In an example embodiment, an area occupied by the text 133 may be less than an area occupied by the text 103. In this case, the text 133 may be prevented from causing a large area of blocking of an icon and a text in the icon region 132, thereby facilitating the user to select a desired icon.

Optionally, similar to FIG. 2E, to guide the user to accurately place a dragged element into a required application, when the user moves the text 133 to within a preset distance range from a target icon, the icon and a corresponding text present a visual special effect of being absorbed by and approaching the text 133, and the icon and the corresponding text may be enlarged.

For example, as an interface shown in FIG. 3D, when the user drags the text 133 to within a preset distance range from an icon 1321 of "Notepad", the icon 1321 and a text 1322 move in a direction in which the text 133 is located, and are enlarged to prompt the user that a currently selected icon is the icon of "Notepad".

In response to moving the text 133 onto a target icon (for example, the icon of "Notepad") and releasing the finger, the electronic device displays an interface 140 shown in FIG. 3E and deletes the screenshot of the interface 100. In addition, if the electronic device detects that when the finger is released, the text 133 is at a position that has a distance from any icon in the icon region 132 being greater than the preset distance, the interface shown in FIG. 3B is displayed, and the screenshot of the interface 100 is deleted.

As shown in FIG. 3E, the interface 140 may include a main interface 141 and a floating window 142. In this example, the main interface 141 may be the screenshot of the interface 100, and the floating window 142 is an interface corresponding to the "Notepad" application. The user may adjust a specific position of the floating window 142 in the interface 140 by pressing and holding, and then dragging the floating window 142. In a possible implementation, the interface 140 may further include a pop-up window. For example, the main interface 141 may further be the interface 110 shown in FIG. 3B (for example, the main interface 141 may not include a grayscale layer). In this case, a pop-up window may further be displayed below the main interface 141. The floating window 142 is located at an uppermost layer and may cover a part of the pop-up window. The user may move a display position of the floating window 142 to expose the pop-up window.

The floating window 142 includes a button bar 1421 located at the top and a floating window main interface 1422 located below the button bar 1421.

The floating window main interface 1422 displays an application interface of the "Notepad" application. As shown in FIG. 3E, the floating window main interface 1422 includes a title 1424, a text 1423, a back button 1425, and a "more" button 1426.

The text 1423 is text content transmitted from a video application to the Notepad application through a cross-application transmission service. In other words, content included in the text 1423 is the same as content of the text 133 and the text 103.

The button bar 1421 includes operation buttons that can be used for the floating window, for example, a close button 1427, an expand button 1428, and a minimize button 1429.

The electronic device closes the floating window 142 in response to a tap operation performed by the user on the close button 1427.

In response to a tap operation performed by the user on the expand button 1428, the electronic device displays an interface of the "Notepad" application in full screen. In other words, the floating window is switched to full-screen display. In addition, after the interface of the "Notepad" application is displayed in full screen, if the electronic device detects an operation of exiting the "Notepad" application, the electronic device switches to the video application in this example. To be specific, after the Notepad application that is displayed in full screen at the upper layer of the video application is exited, an interface 150 shown in FIG. 3F is displayed.

In response to a tap operation performed by the user on the minimize button 1429 or an operation of sliding upward from the bottom of the screen, the electronic device collapses the floating window 142 and displays the floating window 142 in a form of a capsule on a side edge of the screen. Similar to the capsule 91 shown in FIG. 2F, a difference lies in that the icon of the "Notepad" application is displayed in the capsule in this example.

In this example, in response to the tap operation performed by the user on the close button 1427 in the floating window 142, the electronic device displays the interface 150 shown in FIG. 3F The interface 150 shown in FIG. 3F is the same as the interface 110 shown in FIG. 3B, and includes a sub-interface 151 and a pop-up window 152. Details are not described herein again.

It can be learned from the interface change process shown in FIG. 3A to FIG. 3F that, after the information transmission method provided in this embodiment of this application is used, when it is detected that the user performs a long-press operation on an element (that is, the text 103 in this example) in the first interface (that is, the interface of the first application), a screenshot of the first interface is taken and the second interface shown in FIG. 3B is displayed, that is, an interface including the pop-up window 112. When holding duration of the long-press operation reaches a specific threshold, the element that is touched and held is dragged to be located at a top layer of the interface, and an interface located at a lower layer is the screenshot of the first interface. In addition, in a process in which the element is dragged until the element is transmitted to another application (or another electronic device), the interface of the first application displayed on the screen is always the screenshot of the first interface. After the target element is successfully transmitted to another application or another electronic device, the interface of the first application displayed, after the cross-application transmission interface is exited, on the screen is an interface including a pop-up window, that is, the interface shown in FIG. 3F. In other words, in a process in which the target element selected by the user is dragged until the target element is successfully transmitted to another application in the electronic device or an application of another electronic device, the screenshot of the first interface not including the pop-up window 112 is displayed in the interface of the first application. This can avoid user misoperation caused by an interference factor of the pop-up window on the user, thereby improving operation efficiency of information transmission, and finally improving user experience.

The foregoing processes shown in FIG. 2A, FIG. 2B, FIG. 2C, FIG. 2D, FIG. 2E, and FIG. 2F and FIG. 3A, FIG. 3B, FIG. 3C, FIG. 3D, FIG. 3E, and FIG. 3F are about transmitting the target element in the first application of the electronic device to another application of the electronic device. The target element herein may be any one of a video, an audio, a picture, a text, and a document. A scenario of transmitting the video, the audio, and the document across applications is similar to the foregoing processes in FIG. 2A, FIG. 2B, FIG. 2C, FIG. 2D, FIG. 2E, and FIG. 2F and FIG. 3A, FIG. 3B, FIG. 3C, FIG. 3D, FIG. 3E, and FIG. 3F, and details are not described herein again.

In addition, the information transmission method provided in this application is also applicable to a scenario of cross-device transmission. An icon region in a cross-application transmission interface includes an application icon for cross-device transmission, and a target element may be transmitted to an application of another electronic device after the application icon for cross-device transmission in the icon region is selected. Therefore, an interface change process of the screen in a cross-device transmission process is the same as an interface change process of the cross-application transmission scenario. Details are not described herein again.

In addition, the information transmission method provided in this application is also applicable to a split-screen display scenario. For example, the screen of the electronic device is divided into at least two display regions, and each display region respectively displays an interface of a different application. In the split-screen display scenario, an interface change process of the first application (that is, an application including a to-be-transmitted element) in a process of cross-application transmission or cross-device transmission is the same as a change process shown in FIG. 2A, FIG. 2B, FIG. 2C, FIG. 2D, FIG. 2E, and FIG. 2F or FIG. 3A, FIG. 3B, FIG. 3C, FIG. 3D, FIG. 3E, and FIG. 3F, and details are not described herein again.

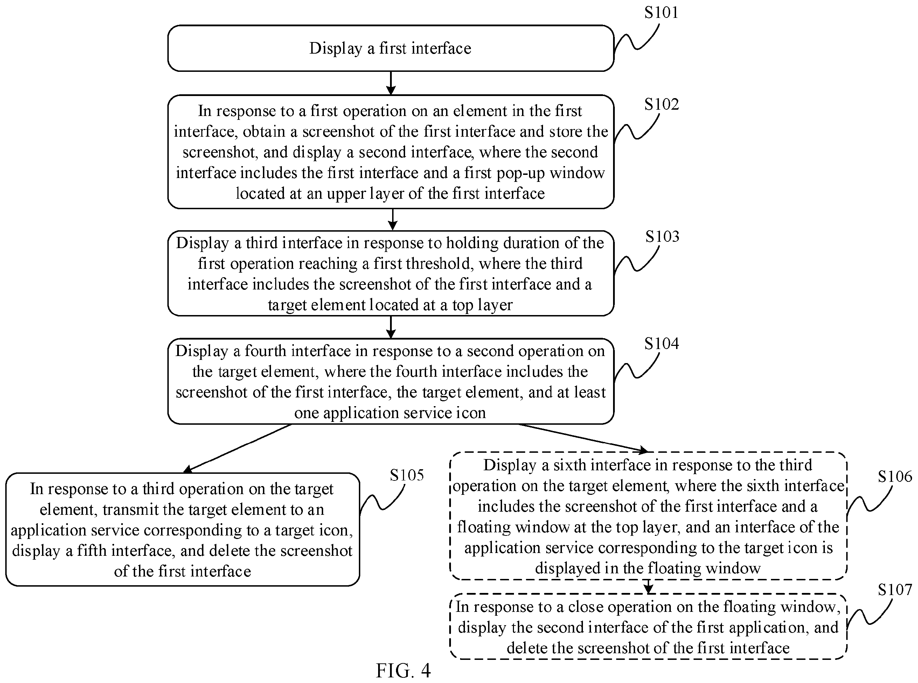

A process of the information transmission method provided in the embodiments of this application is described below in detail with reference to FIG. 4.

FIG. 4 shows a flowchart of an information transmission method according to an embodiment of this application. The method is applied to an electronic device and may include the following steps:
S101: Display a first interface, where the first interface is an interface of a first application, and a content element displayed in the interface includes at least one of a picture, a text, and a video.

The first application may be any application installed in the electronic device. The first interface may be any interface of the first application. For example, the first interface of the first application may be the interface shown in FIG. 2A or FIG. 3A.

S102: In response to a first operation on an element in the first interface, obtain a screenshot of the first interface and store the screenshot, and display a second interface.

The second interface may include the first interface and a first pop-up window located at an upper layer of the first interface.

In an example embodiment, the first operation may be a long-press operation. After detecting a long-press operation (for example, press duration reaches 200 ms) of a user on any content element displayed in the first interface, the electronic device takes a screenshot of the first interface and stores the screenshot. Optionally, the screenshot may be stored in memory space corresponding to the first application. Storing the screenshot in the memory space can reduce read/write time.

In an example embodiment, first logic code may be inserted at method code used for page creation, and when a page of a specific application is created, the first logic code may obtain an event reported by a screen to the application, such as a touch event, a movement event, and a lift event (that is, a press-and-lift event).

Further, the first logic code may transmit an obtained event reported by the screen to logic code used for implementing the information transmission method in this application, and the logic code performs a corresponding operation based on each received event. For example, timing is started after a touch event on an interface corresponding to the first application. If no lift event is received after 200 ms of timing, it is determined that the touch operation is a long-press operation. A screenshot of the first interface of the first application is taken, and the screenshot is stored in memory space of an application corresponding to this page.

In addition, the first application displays the second interface in response to the first operation performed by the user on the element in the first interface.

The first application pops up the first pop-up window in response to the long-press operation performed by the user on the element in the first interface. The first pop-up window is used to prompt the user about an operation that can be performed on a selected element. For example, in the scenario shown in FIG. 2A, FIG. 2B, FIG. 2C, FIG. 2D, FIG. 2E, and FIG. 2F, a selected content element is a picture, and a pop-up window displayed in the second interface includes Save Picture, Share Picture, Set Wallpaper, and the like.

For example, in response to the long-press operation performed by the user on the image 11 in the interface 10 shown in FIG. 2A, the electronic device takes a screenshot of the interface 10 and displays the interface 20 shown in FIG. 2B. In this example, the interface 20 is the second interface.

For another example, in response to the long press operation on the text 103 in the interface 100 shown in FIG. 3A, the electronic device takes a screenshot of the interface 100 and displays the interface 110 shown in FIG. 3B.

S103: Display a third interface in response to duration of the first operation being greater than or equal to a first threshold.

The first threshold in this embodiment may be freely set based on an actual requirement, for example, 1s.

In an example embodiment, after determining that holding duration of the long-press operation reaches the first threshold (for example, 1s) based on a touch event and a lift event that are received from the first interface, the logic code used for implementing the information transmission method in this application controls the screen to display the third interface. The third interface may include the screenshot of the first interface and a target element located at a top layer. The target element is an element selected by the user in the first interface by performing the first operation.

In an example embodiment, after it is detected that press duration of the long-press operation is greater than or equal to the first threshold, the screenshot of the first interface is covered on the second interface. Further, the target element selected by the user in the first interface is dragged to form an independent element (that is, the image 62 shown in FIG. 2C or the text 121 shown in FIG. 3C), and is displayed on top of the screen.

For example, when the user continues to touch and hold the image 11 in the interface shown in FIG. 2B, the interface 60 shown in FIG. 2C is displayed. For another example, if the user continues to touch and hold the text 103 in the interface shown in FIG. 3B, the interface 120 shown in FIG. 3C is displayed.

S104: Display a fourth interface in response to a second operation on the target element.

In an example embodiment, the second operation may be a drag operation, that is, pressing and holding, and then moving. The logic code used for implementing the information transmission method in this application determines a moving track and a moving distance of a touch operation based on the touch event and the movement event that are received and that correspond to a first application page. If a distance between a position at which movement stops and a side edge of the screen is within a preset distance range, the screen is triggered to display the fourth interface.

The fourth interface includes a sub-interface, at least one application icon, and a target element located at the top layer. The sub-interface may be obtained after three-dimensional transformation is performed on the first interface. To be specific, the first interface obtained after three-dimensional transformation presents a visual effect of opening a door inward.

The at least one application icon may be located on a left side edge or a right side edge of the screen. The at least one application icon herein may be an icon of any application installed in the electronic device or a service icon in the application.

For example, when the user drags, in the interface shown in FIG. 2C, the image 62 to a position that has a preset distance from the right side edge of the screen, the interface 70 shown in FIG. 2D is displayed, and the interface 70 is the fourth interface.

For another example, when the user drags, in the interface shown in FIG. 3C, the text 121 to a position that has a preset distance from the right side edge of the screen, the interface 130 shown in FIG. 3D is displayed, and the interface 130 is the fourth interface.

In a scenario, when the target element is moved onto a target icon and the finger is released, the target element may be transmitted to an application corresponding to the target icon, and an interface including feedback information and the first pop-up window is displayed after transmission is completed. The following describes this scenario in detail with reference to S105.

S105: In response to a third operation on the target element, transmit the target element to an application corresponding to a target icon, display a fifth interface, and delete the screenshot of the first interface.

The target icon is any one of the foregoing at least one application icon. For example, the feedback information may be displayed in a form of a capsule. For example, the capsule 91 shown in FIG. 2F is feedback information obtained after transmission is completed.

In an example embodiment, the third operation may be dragging the target element to a position that has a distance from a specific application icon being less than a specific threshold and releasing the finger. To be specific, the user drags the target element near a specific application icon in a side application bar in the fourth interface and releases the finger, to transmit the target element to an application corresponding to the target service icon.

In an embodiment of this application, the logic code used for implementing the information transmission method in this application determines, based on a movement event and a release finger event that are received and that correspond to a dragged element, a position at which the user releases the finger and further determines a target icon based on the position at which the user releases the finger, and finally transmits the target element to the application corresponding to the target icon, and displays the fifth interface. In addition, the screenshot of the first interface stored in the memory space of the first application is deleted.

For example, as shown in FIG. 2E, after the image 83 is dragged onto the icon of Global Favorites, the image 83 is transmitted from the first application to Global Favorites, and the screen displays the interface shown in FIG. 2F, where the interface is the fifth interface.

In another scenario, when the target element is moved onto the target icon and the finger is released, an interface of the application corresponding to the target icon is displayed in a floating window, that is, the application corresponding to the target icon is started in the floating window. The following describes the scenario in detail with reference to S106~S107.

S106: Display a sixth interface in response to the third operation on the target element.

The sixth interface includes the screenshot of the first interface and the floating window displayed on top, and the interface of the application corresponding to the target icon is displayed in the floating window.

In another scenario, the logic code used for implementing the information transmission method in this application determines, based on the movement event and the release finger event that are received and that correspond to the dragged element, the position at which the user releases the finger and further determines the target icon based on the position at which the user releases the finger, and then starts the application corresponding to the target icon in the floating window.

For example, as shown in FIG. 3D, the user moves the text 133 onto the icon of Notepad and releases the finger to display the interface shown in FIG. 3E.

S107: In response to a close operation on a floating window, display the second interface of the first application, and delete the screenshot of the first interface.

In an example embodiment, the logic code used for implementing the information transmission method of this application receives a touch event on a close button of the floating window, and displays the second interface of the first application. In addition, the screenshot of the first interface stored in the memory space of the first application is deleted.

In the information transmission method provided in this embodiment, after the first operation performed by the user on the element in the first interface of the first application is received, the screenshot of the first interface is obtained and stored in a memory. In response to holding duration of the first operation reaching a specific threshold, the screenshot of the first interface and a target element located at an upper layer of the screenshot are displayed. In a process in which the target element is dragged and moved onto the target icon, the screenshot of the first interface is always covered in a window of the first application. In this way, after it is determined that an intention of the user is to perform cross-application transmission, a displayed interface of the first application does not include a pop-up window that causes interference to the user. This avoids user misoperation caused by interference of the pop-up window to the user, thereby improving operation efficiency of information transmission, and finally improving user experience.

The following describes an electronic device provided in this application.

The electronic device may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a dedicated camera (for example, a single-lens reflex camera, a card digital camera), or the like. A specific type of the electronic device is not limited in this application.

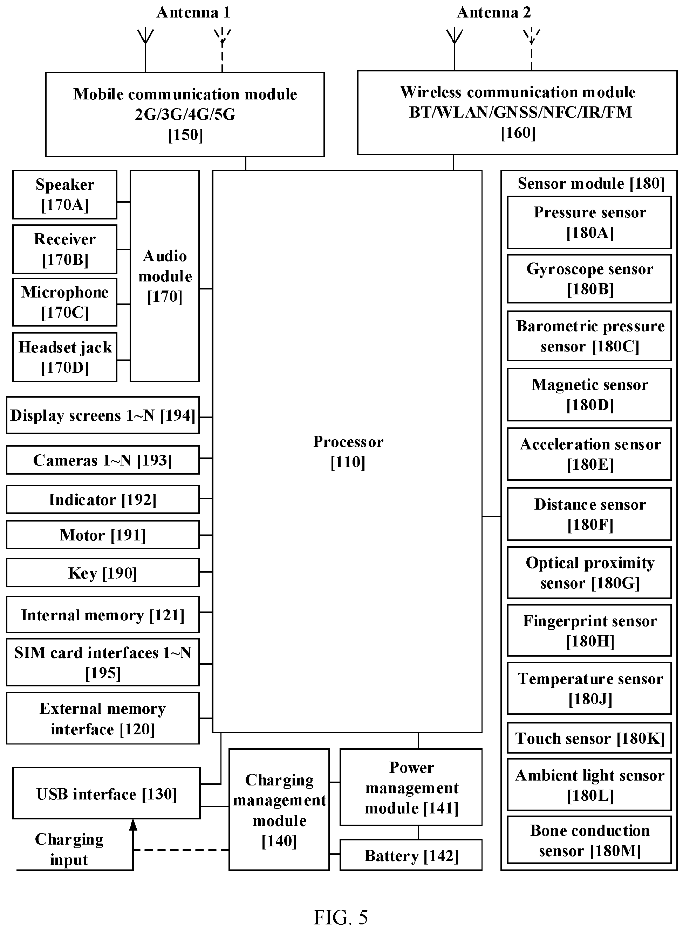

FIG. 5 is a schematic diagram of a structure of an electronic device according to an embodiment of this application.

As shown in FIG. 5, the electronic device may include a processor 110, an external memory interface 120, an internal memory 151, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a timing signal, to complete control of instruction fetching and instruction execution.

A storage may be further disposed in the processor 110 to store instructions and data. In some embodiments, the storage in the processor 110 is a cache. The storage may store instructions or data recently used or cyclically used by the processor 110. If the processor 110 needs to use the instructions or the data again, the processor 110 may directly invoke the instructions or the data from the storage. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 and the touch sensor 180K can communicate with each other through the I2C bus interface, thereby implementing a touch function of the electronic device.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call by using a Bluetooth headset.

The PCM interface may alternatively be used for audio communication, to sample, quantize, and encode an analog signal. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call by using a Bluetooth headset. Both the I2S interface and the PCM interface may be used for audio communication.

The UART interface is a universal serial data bus used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to peripheral devices such as the display screen 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device. The processor 110 communicates with the display screen 194 by using the DSI interface, to implement a display function of the electronic device.

The GPIO interface may be configured by software. The GPIO interface may be configured as a control signal or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to connect to the charger to charge the electronic device, may be configured to transmit data between the electronic device and a peripheral device, or may be configured to be connected to a headset to play audio through the headset. The interface may alternatively be configured to connect to another electronic device, for example, an AR device.

It may be understood that an interface connection relationship between the modules illustrated in this embodiment of the present invention is an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger by using the USB interface 130. In some embodiments of wireless charging, the charging management module 140 may receive wireless charging input by using a wireless charging coil of the electronic device. When charging the battery 142, the charging management module 140 may further supply power to the electronic device by using the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 151, the display screen 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution to wireless communication such as 2G/3G/4G/5G applied to the electronic device. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal obtained after modulation by the modem processor, and convert an amplified signal into an electromagnetic wave for radiation by using the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low-frequency baseband signal. Then, the demodulator transfers, to the baseband processor for processing, the low frequency baseband signal obtained through demodulation. The low-frequency baseband signal is processed by the baseband processor and then transferred to the application processor. The application processor outputs a sound signal by using an audio device (not limited to the speaker 170A, the receiver 170B, and the like), or displays an image or a video by using the display screen 194. In some embodiments, the modem processor may be an independent device. In some other embodiments, the modem processor may be independent of the processor 110 and disposed in a same device as the mobile communication module 150 or another functional module.

The wireless communication module 160 may provide a wireless communication solution that is applied to the electronic device, including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

In some embodiments, the antenna 1 and the mobile communication module 150 in the electronic device are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include one or N display screens 194, where N is a positive integer greater than 1.

The electronic device may implement a shooting function by using the ISP, the camera 193, the video codec, the GPU, the display screen 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a standard format, for example, RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform or the like on frequency energy.

The video codec is configured to compress or decompress a digital video. The electronic device may support one or more video codecs. In this way, the electronic device can play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device, for example, image recognition, facial recognition, speech recognition, and text understanding, may be implemented by using the NPU.

The external memory interface 120 may be configured to connect to an external memory card, for example, a Micro SD card, to expand a storage capacity of the electronic device. The external memory card communicates with the processor 110 through the external memory interface 120, to implement a data storage function. For example, files such as music and videos are stored in the external memory card.

The internal memory 151 may be configured to store computer executable program code, where the executable program code includes instructions. The internal memory 151 may include a program storage area and a data storage area. The program storage area may store an operating system, an application required by at least one function (for example, a sound playback function or an image playback function), and the like. The data storage area may store data (for example, audio data and a phone book) and the like created during use of the electronic device. In addition, the internal memory 151 may include a high-speed random access memory, and may further include a nonvolatile memory, for example, at least one magnetic disk storage device, a flash memory device, or a universal flash storage (universal flash storage, UFS). The processor 110 performs various function applications and data processing of the electronic device by running the instructions stored in the internal memory 151 and/or the instructions stored in the storage disposed in the processor.

The electronic device may implement an audio function by using the audio module 170, the speaker 170A, the receiver 170B, the microphone 170C, the headset jack 170D, the application processor, and the like. For example, music play and sound recording are implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device may be configured to listen to music or answer a call in a hands-free mode by using the speaker 170A.

The receiver 170B, also referred to as an "earpiece", is configured to convert an audio electrical signal into a sound signal. When the electronic device answers a call or receives a voice message, the telephone receiver 170B may be placed close to a human ear to receive a voice.

The microphone 170C, also referred to as a "mic" or a "mike", is configured to convert a sound signal into an electrical signal. When making a call or sending voice information, a user may make a sound by approaching the mouth to the microphone 170C, to input a sound signal to the microphone 170C. At least one microphone 170C may be disposed in the electronic device. In some other embodiments, two microphones 170C may be disposed in the electronic device, to implement a noise reduction function in addition to sound signal collection. In some other embodiments, three, four, or more microphones 170C may be alternatively disposed in the electronic device, to implement sound signal collection and noise reduction, and further identify a sound source and implement a directional recording function and the like.

The headset jack 170D is configured to be connected to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device determines intensity of pressure based on a change of the capacitance. When a touch operation is performed on the display screen 194, the electronic device detects intensity of the touch operation based on the pressure sensor 180A. The electronic device may alternatively calculate a touch position based on a detected signal of the pressure sensor 180A. In some embodiments, touch operations performed at a same touch position but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device. In some embodiments, angular velocities of the electronic device around three axes (namely, x, y, and z axes) may be determined by using the gyroscope sensor 180B. The gyroscope sensor 180B may be configured to implement image stabilization during shooting. For example, when a shutter is pressed, the gyroscope sensor 180B detects an angle at which the electronic device jitters, calculates, based on the angle, a distance for which a lens module needs to compensate, and allows the lens to cancel the jitter of the electronic device through reverse motion, to implement image stabilization. The gyroscope sensor 180B may be further used in scenarios of navigation and a motion sensing game.

The barometric pressure sensor 180C is configured to measure barometric pressure. In some embodiments, the electronic device calculates an altitude based on a barometric pressure value that is measured by the barometric pressure sensor 180C, to assist in positioning and navigation.

The magnetic sensor 180D includes a Hall sensor. The electronic device may detect opening and closing of a flip leather case by using the magnetic sensor 180D. In some embodiments, when the electronic device is a flip phone, the electronic device may detect opening and closing of a flip cover based on the magnetic sensor 180D. Further, features such as automatic unlocking of the flip cover are set based on a detected opening/closing state of the leather case or a detected opening/closing state of the flip cover.

The acceleration sensor 180E may detect magnitudes of acceleration of the electronic device in various directions (usually on three axes). When the electronic device is static, magnitude and a direction of gravity may be detected. The acceleration sensor 180E may be further configured to identify a posture of the electronic device, and is applied to applications such as switching between a landscape mode and a portrait mode and a pedometer.

The distance sensor 180F is configured to measure a distance. The electronic device may measure the distance by using infrared or laser. In some embodiments, in a shooting scenario, the electronic device may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The electronic device emits infrared light outward by using the light-emitting diode. The electronic device detects reflected infrared light from a nearby object by using the photodiode. When abundant reflected light is detected, it may be determined that there is an object near the electronic device. When insufficient reflected light is detected, the electronic device may determine that there is no object near the electronic device. The electronic device may detect, by using the optical proximity sensor 180G, that the user holds the electronic device close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device may adaptively adjust brightness of the display screen 194 based on the sensed brightness of the ambient light. The ambient light sensor 180L may be further configured to automatically adjust white balance during photographing. The ambient light sensor 180L may further cooperate with the optical proximity sensor 180G to detect whether the electronic device is in a pocket to prevent an unintentional touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device performs a temperature processing strategy based on a temperature that is detected by the temperature sensor 180J. For example, when the temperature reported by the temperature sensor 180J exceeds a threshold, the electronic device degrades performance of a processor located near the temperature sensor 180J, to reduce power consumption and implement thermal protection. In some other embodiments, when the temperature is less than another threshold, the electronic device heats the battery 142, to prevent the electronic device from being abnormally powered off due to a low temperature. In some other embodiments, when the temperature is lower than still another threshold, the electronic device boosts an output voltage of the battery 142, to avoid abnormal power-off caused by a low temperature.

The touch sensor 180K is also referred to as a "touch control device". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device, and is located at a different position from the display screen 194.

The bone conduction sensor 180M may obtain a vibration signal. In some embodiments, the bone conduction sensor 180M may obtain a vibration signal of a vibration bone in a human vocal-cord part. The bone conduction sensor 180M may alternatively be in contact with a human pulse to receive a blood pressure pulse signal. In some embodiments, the bone conduction sensor 180M may alternatively be disposed in a headset, to form a bone conduction headset in combination with the headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure pulse signal obtained by the bone conduction sensor 180M, to implement a heart rate detection function.

The key 190 includes a power on/off key, a volume key, or the like. The key 190 may be a mechanical key, or may be a touch key. The electronic device may receive a key input, and generate a key signal input related to user settings and function control of the electronic device.

The motor 191 may generate a vibration prompt. The motor 191 may be configured to provide a vibration prompt for an incoming call, and may also be configured to provide vibration feedback for a touch. For example, touch operations performed on different applications (for example, photographing and audio playing) may correspond to different vibration feedback effects. The motor 191 may also correspond to different vibration feedback effects for touch operations applied to different regions of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed incoming call, a notification, and the like.

The SIM card interface 195 is configured to be connected to a SIM card. The SIM card may be inserted into the SIM card interface 195 or removed from the SIM card interface 195, to implement contact with or separation from the electronic device. The electronic device may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may be further compatible with SIM cards of different types. The SIM card interface 195 may also be compatible with an external memory card. The electronic device interacts with a network by using the SIM card, to implement functions such as a call and data communication. In some embodiments, the electronic device uses an eSIM, that is, an embedded SIM card. The eSIM card may be embedded in the electronic device and cannot be separated from the electronic device.

In this embodiment of this application, the storage in the electronic device stores program instructions. After receiving an event of a first operation performed by the user on a content element in a first interface of a first application, the processor 110 executes the program instructions stored in the storage to implement the following process: A screenshot of the first interface is taken and stored, and a display screen is triggered to display a second interface (that is, an interface including a pop-up window of the first application, as shown in FIG. 2B or FIG. 3B. Further, after detecting that holding duration of the first operation of the user reaches a specific threshold, the processor 110 extracts an element that is operated from the first interface to form a target element independent of the first interface, and triggers the display screen to display the screenshot of the first interface over an interface of the first application, and displays the target element on top. In addition, in a process in which the element is dragged until the element is transmitted to another application (or another electronic device), the interface of the first application displayed on the screen is always the screenshot of the first interface. After the target element is successfully transmitted to another application or another electronic device, the displayed interface of the first application, after the cross-application transmission interface is exited, on the screen is an interface including a pop-up window, that is, the interface shown in FIG. 2F or FIG. 3F.

In addition, in this embodiment of this application, after the user drags an information element in the interface, the GPU in the electronic device may perform three-dimensional transformation on the screenshot of the first interface to create, on the screen, a visual effect of pushing the interface inward, and display a recommended application and/or service icon on a side edge of the screen of the electronic device.

In addition, in this embodiment of this application, after the user drags the information element in the interface, the processor 110 may recognize the information element, including recognizing a type of the information element and specific content in the information element, and determine a corresponding application icon and/or application service icon based on a recognition result, and generate a corresponding program instruction. The program instruction may be used to change display information in the display screen 194, for example, update an interface in the display screen to a cross-application transmission interface. The icon displayed in the cross-application transmission interface is the foregoing application icon and/or application service icon determined by the processor 110 based on the recognition result.

In some embodiments, after the user completes information transmission by using the "cross-application transmission interface", the processor 110 may further obtain a type of application service to which the user transmits information, generate corresponding program instructions based on the obtained result, and display a corresponding interface (for example, the interface may display a snack bar, a capsule, and a small window) on the screen with reference to the GPU, to feed back a result of information element transmission to the user.

In addition, an operating system runs on the foregoing components, for example, an iOS^{®} operating system, an Android^{®} open-source operating system, or a Windows^{®} operating system. An application may be installed and run on the operating system.

An operating system of the electronic device may use a layered architecture, an event-driven architecture, a microkernel architecture, a micro-service architecture, or a cloud architecture. In this embodiment of this application, an Android system with the layered architecture is used as an example to describe a software structure of the electronic device.

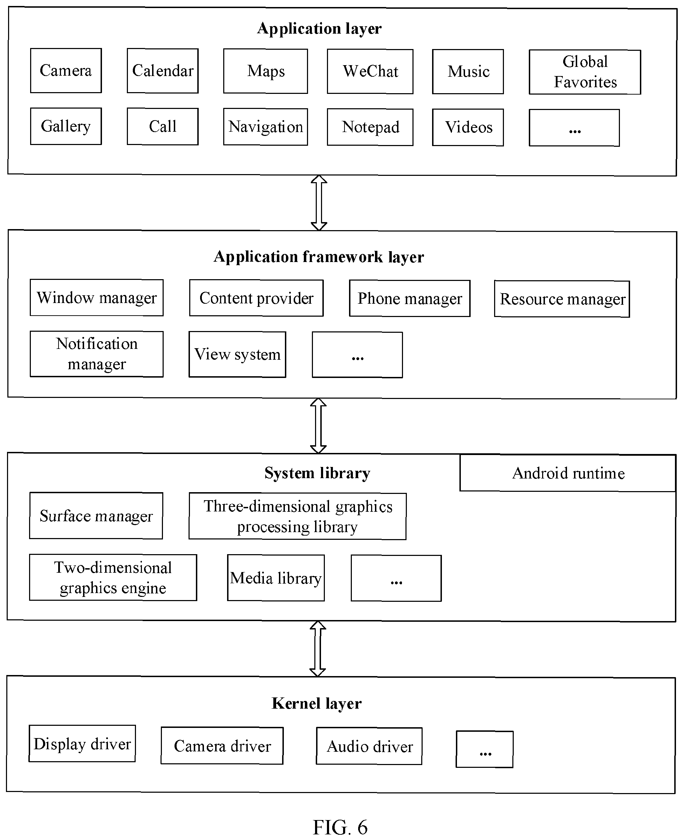

FIG. 6 is a block diagram of a software structure of an electronic device according to an embodiment of this application.

In a layered architecture, software is divided into several layers, and each layer has a clear role and task. Layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 6, the application package may include applications such as Camera, Gallery, Calendar, Phone, Map, Navigation, WeChat, Notepad, Music, Videos, and Global Favorites.

The application framework layer provides an application programming interface (application programming interface, API) and a programming framework for an application at the application layer. The application framework layer includes some predefined functions.

In a possible implementation, program code used for implementing the information transmission method provided in this application may be integrated into the application framework layer. In addition, first logic code may be inserted at a page creation method. When a page of a specific application is created, the first logic code may obtain an event reported by a screen to the application, such as a touch event, a movement event, and a lift event (that is, a press-and-lift event). When receiving the foregoing event and determines that a current operation is a long-press operation, the first logic code triggers execution of the program code used for implementing the information transmission method, thereby implementing the information transmission process shown in FIG. 4.

As shown in FIG. 6, the application framework layer may include a window manager, a content provider, a view system, a phone manager, a resource manager, a notification manager, and the like.

The window manager is configured to manage a window program. The window manager may obtain a size of a display screen, determine whether a status bar exists, lock a screen, capture a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. A display interface may include one or more views. For example, a display interface including an SMS message notification icon may include a view for displaying a text and a view for displaying a picture.

The phone manager is configured to provide a communication function of the electronic device, for example, call status management (including answering, hanging up, and the like).

The resource manager provides various resources for an application, for example, a localized string, an icon, a picture, a layout file, and a video file.

The notification manager enables an application to display notification information in the status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert tone is made, the electronic device vibrates, or an indicator light blinks.

The Android Runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and the like.

It should be noted that although the Android system is used as an example for description in this embodiment of this application, a basic principle thereof is also applicable to an electronic device based on an operating system such as iOS or Windows.

When the integrated unit is implemented in the form of the software functional unit and sold or used as an independent product, the integrated unit may be stored in a computer-readable storage medium. Based on such understanding, the technical solutions of this embodiment essentially, or the part contributing to the conventional technology, or all or some of the technical solutions of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments. The storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. An information transmission method, applied to a first electronic device, wherein the method comprises:
displaying a first interface, wherein the first interface comprises an interface of a first application, and a content element displayed in the interface of the first application comprises at least one of a picture, a text, a video, an audio, and a document;
displaying a second interface in response to a first operation on the content element in the first interface, wherein the second interface comprises a first sub-interface and a first pop-up window, and content displayed in the first sub-interface is the same as content of the first interface;
displaying a third interface in response to duration of the first operation being greater than or equal to a first threshold, wherein the third interface comprises a second sub-interface and a target element, content displayed in the second sub-interface is the same as content displayed in the first interface, and content of the target element is the same as content of the content element in the first interface;
displaying a fourth interface in response to a second operation on the target element, wherein the fourth interface comprises a third sub-interface, the target element, and at least one application icon, and content displayed in the third sub-interface is the same as the content displayed in the first interface; and
transmitting, in response to a third operation on the target element displayed in the fourth interface, the target element to an application corresponding to a target icon, and displaying a fifth interface, wherein the fifth interface comprises the second interface, and the target icon is any one of the at least one application icon displayed in the fourth interface.

2. The method according to claim 1, wherein the displaying a third interface in response to duration of the first operation being greater than or equal to a first threshold comprises:
in response to the duration of the first operation being greater than or equal to the first threshold, covering an upper layer of the second interface with a screenshot of the first interface, and displaying the target element on the screenshot.

3. The method according to claim 2, wherein the screenshot of the first interface is obtained in response to the first operation on the content element in the first interface.

4. The method according to claim 3, wherein after the screenshot of the first interface is obtained, the method further comprises: storing the screenshot of the first interface.

5. The method according to claim 4, wherein the storing the screenshot of the first interface comprises: storing the screenshot of the first interface in memory space.

6. The method according to claim 4 or 5, wherein the method further comprises: deleting the screenshot of the first interface in response to the third operation on the target element displayed in the fourth interface.

7. The method according to any one of claims 1-6, wherein the first pop-up window comprises at least one control; and
after the displaying a second interface in response to a first operation on the content element in the first interface, the method further comprises:
performing corresponding processing on the content element in response to a tap operation on the control in the first pop-up window; or
after the displaying a fifth interface, the method further comprises:
performing corresponding processing on the content element in response to a tap operation on the control in the first pop-up window displayed in the fifth interface.

8. The method according to any one of claims 1-7, wherein the fifth interface further comprises a transmission result of the first electronic device for the target element.

9. The method according to claim 8, wherein the fifth interface comprises a transmission feedback bar, and the transmission feedback bar is used to prompt the transmission result.

10. The method according to any one of claims 1-7, wherein the transmitting, in response to a third operation on the target element displayed in the fourth interface, the target element to an application corresponding to a target icon, and displaying a fifth interface comprises:
in response to the third operation on the target element, transmitting the target element to a service corresponding to the target icon, and displaying a sixth interface, wherein the sixth interface comprises the first interface and a floating window, the floating window displays an interface of the application corresponding to the target icon, and the floating window comprises a close button and a minimize button; and
displaying the fifth interface in response to an operation on the close button or the minimize button, wherein content displayed in the fifth interface is the same as content of the second interface.

11. The method according to any one of claims 1-10, wherein the third operation is an operation of moving the target element to the target icon.

12. The method according to any one of claims 1-11, wherein the target icon is an icon of an application installed in the first electronic device; or
the target icon is an icon of an application installed in a second electronic device, and the second electronic device is communicatively connected to the first electronic device.

13. An electronic device, wherein the electronic device comprises one or more processors, a storage, and a touchscreen; the storage is configured to store program code; and the processor is configured to run the program code, to enable the electronic device to implement the information transmission method according to any one of claims 1-12.

14. A chip system, comprising:
at least one processor and an interface, wherein the interface is configured to receive code instructions and transmit the code instructions to the at least one processor, and the at least one processor runs the code instructions to implement the information transmission method according to any one of claims 1-12.

15. A computer-readable storage medium, storing instructions thereon, wherein when the instructions are run on an electronic device, the electronic device is enabled to perform the information transmission method according to any one of claims 1-12.
